# FASCICULE DE BREVET EUROPEEN

(11) **EP 0 627 826 B1**
(45) Date de publication et mention de la délivrance du brevet: **09.02.2000**
(21) Numéro de dépôt: 94401184.0
(22) Date de dépôt: 30.05.1994
(51) Int. Cl.: H04B 7/185

(54) **Système de relais mémoire pour satellites d'observation**
Speicherrelaisanordnung für Beobachtungssatellit
Memory relay system for observation satellite

(30) Priorité: 02.06.1993 FR 9306572
(43) Date de publication de la demande: 07.12.1994
(73) Titulaire: ALCATEL, 75008 Paris (FR)
(72) Inventeur: Muller, Eric, F-31470 Fonsorbes (FR); Diderot, Laurent, F-31000 Toulouse (FR); Rousson, Jean-Luc, F-31470 Saiguede (FR)
(74) Mandataire: Smith, Bradford Lee

(56) Documents cités:
- EP-A- 0 017 597
- DE-A- 3 909 740
- GB-A- 2 134 353
- IEEE INTERNATIONAL CONFERENCE ON COMMUNICATIONS, vol.3, no.326, 1990, ATLANTA,US; pages 1081 - 1085 A.GANZ ET AL 'TDMA Communication for SS/TDMA Satellites with Optical Intersatellite links'

## Description

Le domaine de l'invention est celui des engins spatiaux et plus particulièrement celui des sondes ou des satellites artificiels qui sont déployés sur des trajectoires ou sur des orbites qui ne sont pas géostationnaires. Les engins concernés n'ont pas, en conséquence du fait qu'ils ne sont pas géostationnaires, des relations géométriques stables et invariables avec un corps céleste qui pourrait être la terre, par exemple. Des satellites en orbite basse autour de la terre sont un exemple : vus d'un point fixe sur la terre, ces satellites "défilent" dans le ciel, jusqu'à s'éclipser au delà de l'horizon.

De tels satellites sont actuellement déployés autour de la terre en orbites basses, en particulier pour l'observation de la terre, où ils ont l'avantage de pouvoir observer pratiquement la terre entière au fur et à mesure de leur déplacement sur orbite, tandis que la terre se tourne sur elle-même et, accessoirement, par rapport au plan de l'orbite. En revanche, du fait que la position de ces satellites dans le ciel n'est pas fixe quand vue de la terre, les stations fixes au sol ne sont pas toujours en mesure d'émettre vers ou de recevoir des communications depuis ces satellites.

Ceci pose un problème dans la mesure où les satellites d'observation sont capable d'observer la terre pendant tout leur trajet, mais ils ne sont capables de transmettre leurs observations pour exploitation que lorsqu'ils sont au dessus d'une station de réception au sol. Une première génération de satellites d'observation a été déployée dans ces conditions (par exemple ERS-1, ERS-2), et le résultat est une observation globale qui comporte des lacunes touchant des zones géographiques qui ne sont pas munies de stations de réception de données au sol.

La solution classique de ce problème est de munir ces satellites de moyens embarqués permettant la mémorisation et le stockage temporaire des données d'observation à bord de ces satellites, qui seront ensuite restituées et transmises vers une station au sol quand le satellite passera au-dessus d'une station de réception. Ces moyens, dans les systèmes actuellement déployés, sont par exemple des moyens d'enregistrement magnétique. Tel est le cas sur les satellites SPOT, par exemple.

Cette solution de l'art antérieur est satisfaisante aussi longtemps que les moyens d'enregistrement et de restitution de données fonctionnent correctement. Parce que ces moyens sont critiques pour la mission d'un satellite d'observation en orbite basse, il est d'usage de prévoir une redondance de ces moyens à bord du satellite. C'est-à-dire qu'il y aura au moins deux équipements complets d'enregistrement à bord, le deuxième équipement pouvant être mis en oeuvre depuis la terre, en cas de défaillance du premier.

En revanche, la défaillance de ces deux équipements handicape considérablement le satellite dans sa mission, car ne pouvant plus stocker des informations, il ne pourra transmettre (en temps réel) que les données qui résultent des observations effectuées quand le satellite se trouve en ligne de vue directe avec une station de réception au sol.

Deux solutions déjà imaginées dans l'art antérieur sont: soit la multiplication de stations de réception au sol, soit l'utilisation de satellites de télécommunications sur orbite géostationnaire comme relais de transmission de données depuis le satellite d'observation vers des stations de réception existantes. Chaque solution présente des inconvénients liés au coûts de conception et d'installation de l'infrastructure nécessaire, et de l'exploitation de cette infrastructure qui n'existe pas encore.

L'invention a pour but de pallier cette situation.

A ces fins, l'invention propose un système de relais mémoire pour engin spatial d'observations, ce système comprenant au moins un engin dit relais mémoire, cet engin relais mémoire comprenant des moyens de réception de signaux provenant dudit engin spatial d'observations, des moyens de conversion et de mise en forme de ces signaux en vue de leur stockage, des moyens de stockage ou de mémoire, des moyens de restitution des signaux stockés, ainsi que des moyens d'émission de ces derniers vers une station de réception.

Selon une configuration particulièrement avantageuse, le(s)dit(s) engin(s) relais mémoire est(sont) positionné(s) de telle manière à être constamment en ligne de vue directe avec ledit engin spatial d'observations. Pour le cas d'un satellite d'observation de la terre évoluant en orbite basse, par exemple, l'engin relais de mémoire peut être un autre satellite placé sur une orbite similaire, qui permet à ce dernier de transmettre ses données en permanence, même en défaillance des moyens embarqués de stockage et de restitution de données, s'ils existent.

Avantageusement, l'engin relais mémoire sera disposé au voisinage de l'engin spatial d'observations dont il assure le relais. Par voisinage, on entend que la distance qui sépare les deux engins est sensiblement inférieure à la distance qui sépare l'un d'entre eux du corps céleste le plus proche de la trajectoire de celui-ci. Par exemple, pour un satellite d'observation de la terre en orbite basse, la distance entre satellites d'observations et de relais mémoire sera inférieure à l'altitude de l'orbite basse employée, ceci afin de préserver une ligne de vue directe entre les deux satellites, sans obstructions qui rendrait la communication entre les deux difficile, voire momentanément impossible.

Selon une réalisation particulière, un système de satellites d'observation de la terre comprend un nombre **n**>1 de satellites d'observation, et le système de satellites relais mémoire selon l'invention comprend le même nombre **n**>1 de satellites relais mémoire, chaque satellite relais mémoire étant disposé au voisinage d'un des satellites d'observation.

Selon une réalisation avantageuse, un système de satellites d'observation de la terre comprend un nombre **n**>1 de satellites d'observation, et le système de satellites relais mémoire selon l'invention comprend un nombre **m** ≤ **n** de satellites relais mémoire, chaque satellite relais mémoire étant disposé au voisinage d'un des satellites d'observation. Cette configuration sera préférée pour pallier des pannes d'équipements embarqués à bord **m** satellites d'observation faisant partie du système de **n** satellites d'observation, un satellite relais mémoire étant disposé au voisinage de chaque satellite dont les moyens embarqués se révèlent défectueux.

Selon une autre réalisation, une constellation d'un nombre **p** de petits satellites relais mémoire peut être déployée en orbite autour d'un corps céleste, ce nombre **p** étant fixe non pas en fonction du nombre de satellites d'observations ou autre à secourir, mais en fonction de la géométrie relative des orbites des satellites relais mémoire et de leurs évolutions autour d'un corps céleste. Par exemple, un système de **p** petits satellites peut être déployé autour de la terre de manière à assurer que, quelque soit la position d'un satellite à secourir autour de la terre, ce satellite trouvera une petit satellite relais mémoire en ligne de vue directe.

Bien que les satellites d'observations de la terre soient présentés dans la description détaillée qui suit comme étant l'application principale de l'invention, d'autres applications sont envisageables dans le cadre de l'invention. La description de l'invention en termes de satellites d'observation de la terre est donnée à titre d'exemple non-limitatif d'un champ d'application de l'invention.

En particulier, des engins qui ne sont pas sur orbite terrestre peuvent être déployés en orbite autour d'une autre planète, par exemple Mars. Les mêmes problèmes de défaillance de moyens d'enregistrement de données à bord peuvent surgir, et l'invention permettra de les résoudre. D'autres engins peuvent être secourus de la même manière, par exemple des télescopes spatiaux ou des sondes interplanétaires pour l'observation des planètes, de leurs satellites, ou même des comètes ou des astéroïdes.

D'autres caractéristiques et avantages du système selon l'invention ressortiront de la description détaillée qui suit, avec ses dessins annexés, dont :
- la figure 1 montre schématiquement un satellite d'observation de la terre en orbite basse selon l'art connu, avec ses stations de réception au sol ;
- la figure 2 montre schématiquement un exemple d'un satellite relais mémoire selon l'invention disposé au voisinage d'un satellite d'observation de la terre selon la figure 1 ;
- la figure 3 montre schématiquement un système d'une pluralité de satellites relais mémoire selon l'invention, disposés pour servir une pluralité de satellites d'observation ;
- la figure 4 montre schématiquement l'organigramme d'un exemple d'une réalisation d'un engin relais mémoire selon l'invention.

Sur toutes les figures, les même repères désignent les mêmes éléments, mais l'échelle de distances n'est pas respectée pour des raisons de clarté.

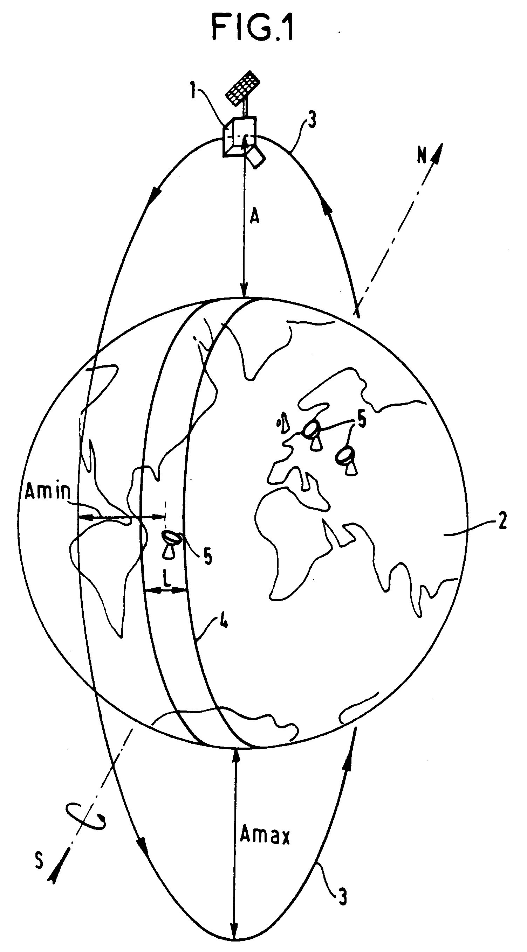

Sur la figure 1, un satellite 1 d'observation de la terre 2 est montré sur une orbite basse 3 autour de la terre. Le satellite choisi pour l'exemple de cette figure est du type SPOT, mais l'enseignement est général. Un satellite de ce type comprend des capteurs de rayonnement électromagnétique, sensibles par exemple dans les bandes spectrales qui s'étendent depuis l'infrarouge (IR) jusqu'à l'ultraviolet (UV) en passant par la lumière visible. Ces capteurs peuvent être sensibles à l'intensité et/ou à la longueur d'onde des radiations reçues à un moment donné ou en fonction de temps. Sachant la position du satellite en fonction de temps, un calcul permet de reconstruire l'image de l'intensité des radiations en fonction de position, et ainsi de réaliser une cartographie de l'objet observé (la terre en l'occurrence).

Le satellite 1 en orbite basse 3 observe la terre 2 directement en dessous de sa trajectoire 3, sur une certaine largueur **L** définie par l'optique des capteurs et par la géométrie relative du satellite et de la terre. Dans le cas le plus général, l'altitude **A** de l'orbite 3 n'est pas constante car l'orbite n'est pas circulaire mais elliptique. L'altitude **A** varie donc entre une valeur minimale **A**ₘᵢₙ et une valeur maximale **A**ₘₐₓ . Sur un tour d'orbite, le satellite observe ainsi une bande 4 de largeur **L** autour de la terre. Pendant que le satellite tourne autour de la terre, la terre tourne sous le satellite, de façon à ce que après avoir parcouru une orbite complète, le satellite ne se trouve pas au-dessus du même endroit qu'au début de l'orbite. Pour cette raison, des satellites d'observation de la terre sont déployés de préférence sur des orbites polaires. La combinaison de la trajectoire orbitale et la rotation de la terre conduit ainsi le satellite à observer la terre entière au cours du temps, avec une périodicité qui dépend des paramètres de l'orbite.

Les données d'observations, une fois acquises par le satellite, doivent être retransmises vers la terre pour traitement et exploitation. Des stations 5 de réception au sol sont prévues à cet effet, et sont installées dans un certain nombre de pays pour constituer l'infrastructure terrestre du programme SPOT par exemple. Seulement, le satellite ne peut transmettre vers l'une de ces stations que s'il est en ligne de vue directe, c'est-à-dire qu'il se trouve au dessus de la station au sol. On voit sur la figure 1 qu'avec un nombre réduit de stations au sol, le satellite ne se trouve pas, la plupart du temps, au dessus d'une station. C'est pourquoi, à bord des satellites SPOT, par exemple, on a prévu des enregistreurs de données, pour permettre d'abord le stockage de données acquises pendant toute l'orbite ou même pendant plusieurs orbites, et ensuite leur restitution et retransmission en différé vers la terre, quand le satellite se trouve au-dessus d'une station au sol.

Un principe similaire peut-être utilisé pour réaliser l'imagerie radar, capable de restituer une cartographie tridimensionnelle de la surface de la terre par synthèse d'image à partir de données d'échos acquises en défilant (SAR en anglais, ce qui signifie Synthetic Aperture Radar).

Le problème qui peut être résolu par le système selon l'invention surgit quand les moyens de stockage de données tombent en panne (SPOT, par exemple). Le problème est le même pour des satellites dépourvus de moyens de stockage (ERS-1, par exemple).

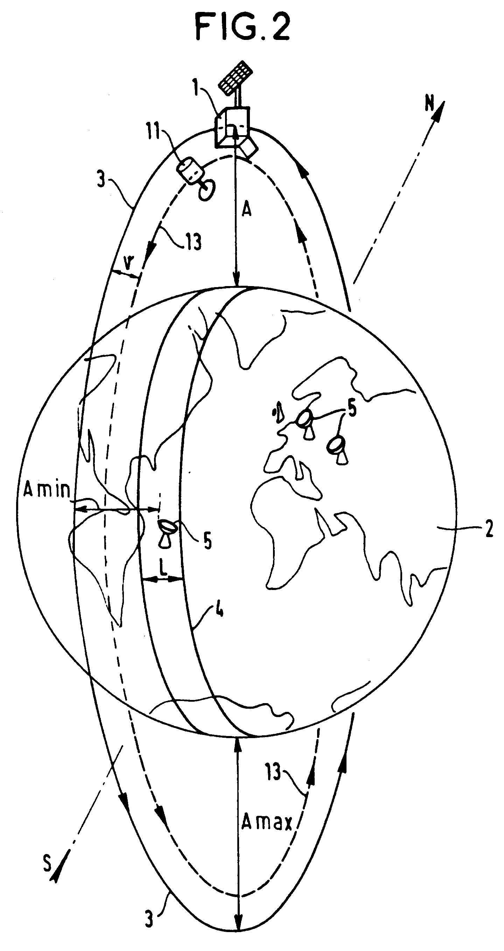

La figure 2 montre un exemple d'un satellite relais mémoire selon l'invention, disposé au voisinage d'un satellite d'observation de la terre selon la figure 1. Le satellite relais mémoire 11 est en orbite basse 13 et disposé au voisinage, à une distance **v**, du satellite d'observation 1. Cette distance **v** est bien inférieure à la distance minimale du satellite 1 de la terre, l'altitude **A**ₘᵢₙ. Pendant que les deux satellites tournent autour de la terre, ils sont parfois en ligne de vue directe avec une station 5 de réception au sol, et parfois ils ne le sont pas.

Pendant les périodes où il n'y a pas de possibilité de liaison directe entre le satellite 1 d'observation et la station 5 de réception au sol, le satellite 11 relais mémoire peut recevoir les signaux émis par le satellite 1 et les stocker, pour les restituer et les ré-émettre vers la station 5 de réception au sol quand son évolution sur orbite le ramènera en ligne de vue directe avec ce dernier.

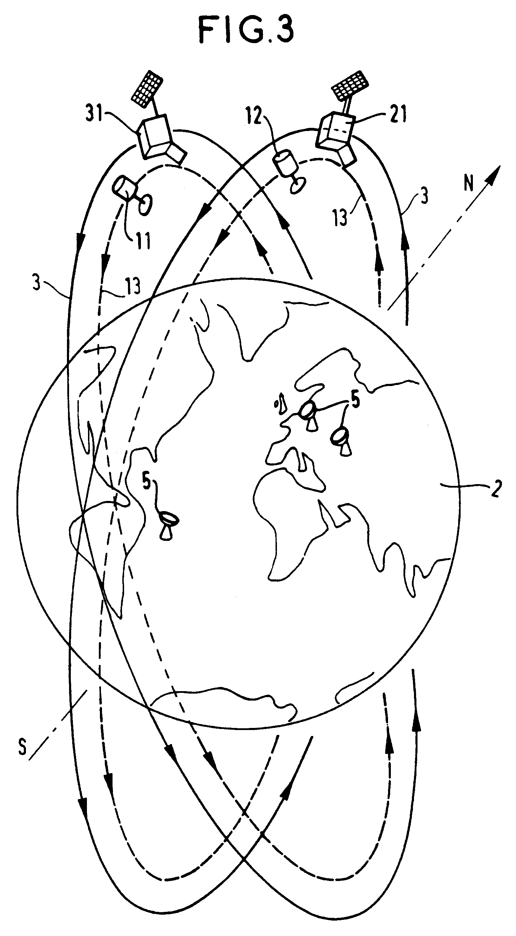

Sur la figure 3, nous voyons un système d'une pluralité **n**>1 de satellites d'observation (21,31,...) et d'une pluralité **m** ≤ **n** de satellites relais mémoire (12,13,...). Dans cet exemple, les moyens de stockage à bord des **m** satellites d'observation (21,31) sont tombés en panne. **m** satellites de relais mémoire (12,13) ont été déployés au voisinage des satellites défectueux (21,31) pour les secourir.

Selon une variante (non-montrée) de l'invention, un système de **p** petits satellites est déployé autour de la terre, avec **p** > **m**, de manière à ce que, quelque soit la position d'un satellite d'observation autour de la terre, ce satellite se trouvera toujours en ligne de vue directe avec au moins un des **p** satellites relais mémoire.

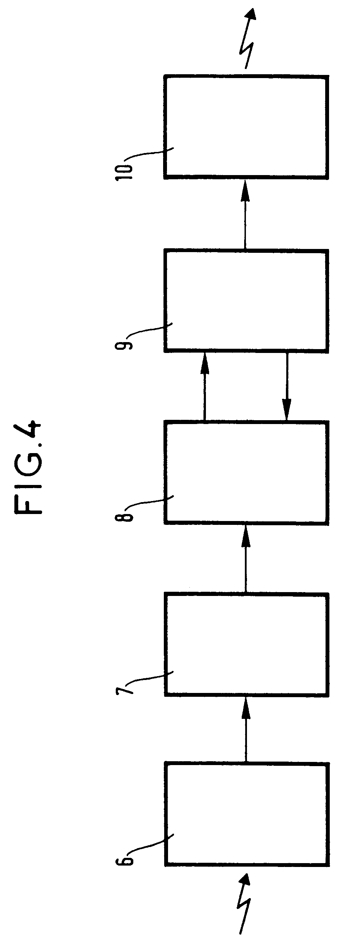

La figure 4 montre schématiquement l'organigramme d'un exemple d'une réalisation d'un engin relais mémoire selon l'invention. Les blocs de ce diagramme représentent schématiquement des fonctions, qui peuvent être réalisées par des moyens dédiés ou partagés. Par exemple, les moyens 6 de réception et des moyens 10 d'émission peuvent partager certains composants physiques, telle l'antenne d'émission/réception, où l'engin peut comprendre deux antennes, l'une pour l'émission et l'autre pour la réception.

Sur la figure 4, on voit que l'engin de relais mémoire 11 comprend en outre des moyens 6 de réception de signaux provenant de l'engin 1 d'observations, des moyens 7 de conversion et de mise en forme de ces signaux, des moyens 8 de stockage ou de mémoire, des moyens 9 de restitution de signaux stockés, ainsi que des moyens 10 d'émission de ces signaux vers une station 5 de réception.

L'homme de l'art saura agencer ces différents moyens, tous connus dans l'art, pour accomplir la mission dans chaque cas précis de l'implémentation de l'invention.

Les moyens 6 de réception comprennent, par exemple, une antenne de réception avec son électronique d'amplification des signaux reçus. Ces signaux seront par exemple en forme de modulations numériques ou analogiques d'ondes électromagnétiques hyperfréquence. Dans ce cas, les moyens 7 de conversion et de mise en forme de signaux en vue de leur stockage, seront des moyens de traitement de signaux permettant la démodulation et éventuellement la numérisation des données des signaux. L'information des signaux peut ainsi être stockée sous forme numérique, dans des moyens 8 de stockage mémoires numériques à semiconducteurs, ou sous forme numérique ou analogique par des enregistreurs magnétiques par exemple. Les moyens 9 de restitution de données sont capables de lire la mémoire ou l'enregistrement effectué par les moyens 8 de stockage, et de les fournir à des moyens 10 d'émission. Ces moyens d'émission peuvent comprendre par exemple une électronique de modulation et d'amplification d'une onde hyperfréquence avec une antenne d'émission d'une telle onde.

Les exemples donnés dans les figures concernent des engins sur orbite terrestre. Cependant, l'invention peut s'appliquer également dans le cas d'engins sur orbite autour d'un autre corps céleste, par exemple la lune ou la planète Mars.

D'autre part, les exemples données concernent des trajectoires qui possèdent une périodicité, s'agissant de trajectoires qui se referment sur elles-mêmes après un certain nombre de tours. L'invention peut être utilisée aussi pour des engins sur des trajectoires ouvertes, telles des sondes interplanétaires. La difficulté qui peut se présenter alors sera celle de placer l'engin relais mémoire au voisinage de l'engin d'observation à secourir, en particulier si ce dernier a déjà effectué plusieurs années de voyage. Mais ceci restera possible dans la plupart des cas.

Les moyens constitutifs d'un engin relais mémoire ont été donnés à titre d'exemples non-limitatifs, et des moyens équivalents obtenant les mêmes fonctions peuvent être utilisés sans sortir pour autant du cadre de l'invention.

Finalement, les exemples présentés sur les figures utilisent une station de réception au sol. Il est bien entendu que la station de réception peut être sur un autre corps céleste (la lune par exemple) ou même sur un autre engin, par exemple un autre satellite ou un aéronef.

## Revendications

1. Système de relais mémoire pour au moins un engin spatial d'observations (1), ce système comprenant au moins un engin spatial dit relais mémoire (11), cet engin spatial relais mémoire comprenant des moyens (6) de réception de signaux provenant dudit engin spatial d'observations, des moyens (7) de conversion et de mise en forme de ces signaux en vue de leur stockage, des moyens (8) de stockage ou de mémoire, des moyens (9) de restitution des signaux stockés, ainsi que des moyens (10) d'émission de ces derniers vers une station (5) de réception.

2. Système de relais mémoire pour engin spatial d'observations selon la revendication 1, le(s)dit(s) engin(s) spatial(aux) (11, 12, 13, ...) relais mémoire est(sont) positionné(s) de telle manière à être constamment en ligne de vue directe avec au moins un de(s) dit(s) engin(s) spatial(aux) (1, 21, 31,...) d'observations.

3. Système de relais mémoire pour engin spatial d'observations (1) selon l'une quelconque des revendications 1 ou 2, caractérisé en ce que ledit engin spatial d'observations (1) est un satellite.

4. Système de relais mémoire pour engin spatial d'observations (1) selon l'une quelconque des revendications 1 à 3, caractérisé en ce que ledit engin spatial relais mémoire (11) sera disposé au voisinage de l'engin spatial d'observations dont il assure le relais.

5. Système de relais mémoire pour engin spatial d'observations (1) selon l'une quelconque des revendications 3 à 4, caractérisé en ce que le système de satellites d'observation de la terre comprend un nombre **n**>1 de satellites d'observation (1, 21, 31,...), et le système de satellites relais mémoire selon l'invention comprend un nombre **m** ≤ **n** de satellites relais mémoire (11, 12, 13,...).

6. Système de relais mémoire pour engin spatial d'observations (1) selon l'une quelconque des revendications 3 à 4, caractérisé en ce que le système de satellites d'observation de la terre comprend un nombre *n* ≥ 1 de satellites d'observation (1, 21, 31,...), et le système de satellites relais mémoire selon l'invention comprend un nombre **m** ≥ **n** de satellites relais mémoire (11, 12, 13,...).

7. Système de relais mémoire pour engin spatial d'observations (1) selon l'une quelconque des revendications 1 ou 2, caractérisé en ce que ledit engin spatial d'observations (1) est une sonde interplanétaire.

8. Engin spatial relais mémoire pour système de relais mémoire selon l'une quelconque des revendications 1 à 7, cet engin spatial relais mémoire comprenant des moyens (6) de réception de signaux provenant dudit engin spatial d'observations, des moyens (7) de conversion et de mise en forme de ces signaux en vue de leur stockage, des moyens (8) de stockage ou de mémoire, des moyens (9) de restitution des signaux stockés, ainsi que des moyens (10) d'émission de ces derniers vers une station (5) de réception.

## Claims

1. Memory relay system for at least one remote sensing spacecraft (1), said system comprising at least one memory relay spacecraft (11), said memory relay spacecraft comprising means (6) for receiving signals from said remote sensing spacecraft, means (7) for converting and formatting said signals for storing them, storage or memory means (8), means (9) for recovering the stored signals, and means (10) for transmitting the latter to a receiving station (5).

2. Memory relay system for remote sensing spacecraft according to claim 1, wherein said memory relay spacecraft (11, 12, 13, ...) is (are) positioned so as to be constantly in direct line of sight with at least one remote sensing spacecraft (1, 21, 31, ...).

3. Memory relay system for remote sensing spacecraft (1) according to claim 1 or claim 2, characterised in that said remote sensing spacecraft (1) is a satellite.

4. Memory relay system for remote sensing spacecraft (1) according to any one of claims 1 to 3, characterised in that said memory relay spacecraft (11) is in the vicinity of the remote sensing spacecraft which it relays.

5. Memory relay system for remote sensing spacecraft (1) according to claim 3 or claim 4, characterised in that the Earth remote sensing satellite system comprises a number n > 1 of remote sensing satellites (1, 21, 31, ...) and the memory relay satellite system of the invention comprises a number m ≤ n of memory relay satellites (11, 12, 13, ...).

6. Memory relay system for remote sensing spacecraft (1) according to claim 3 or claim 4, characterised in that the Earth remote sensing satellite system comprises a number n ≥ 1 of remote sensing satellites (1, 21, 31, ...) and the memory relay satellite system of the invention comprises a number m ≥ n of memory relay satellites (11, 12, 13, ...).

7. Memory relay system for remote sensing spacecraft (1) according to claim 1 or claim 2, characterised in that said remote sensing spacecraft (1) is an interplanetary probe.

8. Memory relay spacecraft for a memory relay system according to any one of claims 1 to 7, said memory relay spacecraft comprising means (6) for receiving signals from said remote sensing spacecraft, means (7) for converting and formatting the signals for storing them, storage or memory means (8), means (9) for recovering the stored signals, and means (10) for transmitting the latter to a receiving station (5).

## Patentansprüche

1. Speicherrelaisanordnung für wenigstens einen Beobachtungsraumflugkörper (1), wobei diese Anordnung wenigstens einen Speicherrelais (11) genannten Raumflugkörper umfasst, wobei dieser Speicherrelaisraumflugkörper Mittel (6) zum Empfang von Signalen, die vom Beobachtungsraumflugkörper stammen, Mittel (7) zur Umwandlung und Transformation dieser Signale im Hinblick auf ihre Speicherung, Speicherungs- oder Speichermittel (8), Mittel (9) zur Wiedergabe der gespeicherten Signale sowie Mittel (10) zum Senden dieser letzteren zu einer Empfangsstation (5) umfasst.

2. Speicherrelaisanordnung für Beobachtungsraumflugkörper nach Anspruch 1, bei der der (die) Speicherrelaisraumflugkörper (11, 12, 13, ...) derart angeordnet ist (sind), dass er (sie) sich dauernd mit wenigstens einem (der) Beobachtungsraumflugkörper (1, 21, 31, ...) in direkter Sichtlinie befindet (befinden).

3. Speicherrelaisanordnung für Beobachtungsraumflugkörper (1) nach einem der Ansprüche 1 oder 2, dadurch gekennzeichnet, dass der Beobachtungsraumflugkörper (1) ein Satellit ist.

4. Speicherrelaisanordnung für Beobachtungsraumflugkörper (1) nach einem der Ansprüche 1 bis 3, dadurch gekennzeichnet, dass der Speicherrelaisraumflugkörper (11) in der Nähe des Beobachtungsraumflugkörpers angeordnet wird, für den er das Relais stellt.

5. Speicherrelaisanordnung für Beobachtungsraumflugkörper (1) nach einem der Ansprüche 3 bis 4, dadurch gekennzeichnet, dass die Anordnung von Satelliten zur Beobachtung der Erde eine Anzahl n > 1 von Beobachtungssatelliten (1, 21, 31, ...) umfasst und die Anordnung von Speicherrelaissatelliten gemäß der Erfindung eine Anzahl m = n von Speicherrelaissatelliten (11, 12, 13, ...) umfasst.

6. Speicherrelaisanordnung für Beobachtungsraumflugkörper (1) nach einem der Ansprüche 3 bis 4, dadurch gekennzeichnet, dass die Anordnung von Satelliten zur Beobachtung der Erde eine Anzahl n = 1 von Beobachtungssatelliten (1, 21, 31, ...) umfasst und die Anordnung von Speicherrelaissatelliten gemäß der Erfindung eine Anzahl m = n von Speicherrelaissatelliten (11, 12, 13, ...) umfasst.

7. Speicherrelaisanordnung für Beobachtungsraumflugkörper (1) nach einem der Ansprüche 1 oder 2, dadurch gekennzeichnet, dass der Beobachtungsraumflugkörper (1) eine interplanetare Sonde ist.

8. Speicherrelaisraumflugkörper für eine Speicherrelaisanordnung nach einem der Ansprüche 1 bis 7, wobei dieser Speicherrelaisraumflugkörper Mittel (6) zum Empfang von Signalen, die vom Beobachtungsraumflugkörper stammen, Mittel (7) zur Umwandlung und Transformation dieser Signale im Hinblick auf ihre Speicherung, Speicherungs- oder Speichermittel (8), Mittel (9) zur Wiedergabe der gespeicherten Signale sowie Mittel (10) zum Senden dieser letzteren zu einer Empfangsstation (5) umfasst.
